# EUROPEAN PATENT APPLICATION

(11) **EP 1 815 908 A1**
(43) Date of publication of application: **08.08.2007**
(21) Application number: 07000044.3
(22) Date of filing: 02.01.2007
(51) Int. Cl.: B01J 23/63, B01D 53/94

(54) **Exhaust gas purification catalyst**

(30) Priority: 02.02.2006 JP 2006025582
(71) Applicant: Mazda Motor Corporation, Aki-gun, Hiroshima 730-8670 (JP)
(72) Inventor: Akamine, Masaaki c/o Mazda Motor Corporation, Hiroshima 730-8670 (JP); Shigetsu, Masahiko c/o Mazda Motor Corporation, Hiroshima 730-8670 (JP); Kawabata, Hisaya c/o Mazda Motor Corporation, Hiroshima 730-8670 (JP)
(74) Representative: Müller-Boré & Partner Patentanwälte

(57) **Abstract**

A catalytic matter comprises alumina particles. A compound oxide is dispersedly loaded on surfaces of the alumina particles. The compound oxide contains cerium, zirconium, and lanthanum, but not aluminum. A catalytic metal is loaded on the surfaces of the alumina particles. The catalytic matter may be manufactured by preparing a first acidic solution containing aluminum, adding a first basic solution to the first acidic solution, thereby obtaining a second basic solution and precipitating a first hydroxide in the second basic solution, preparing a second acidic solution containing cerium, zirconium and lanthanum, adding the second acidic solution to the first hydroxide, thereby precipitating a second hydroxide on the first hydroxide, drying the first and second hydroxides to obtain an oxide matter, and loading a catalytic metal on the oxide matter. By dispersedly loading the compound oxide containing cerium as an oxygen storage material on the alumina particle surfaces, the amount of the oxygen storage material on the surfaces of alumina particles may be increased, and the catalytic metal may be loaded on or in the proximity of the oxygen storage material. Therefore, the catalytic metal may be supplied with sufficient amount of active oxygen to purify the exhaust gas.

## Description

The present invention relates generally to an exhaust gas purification catalyst, and more particularly to a catalytic converter having an oxide layer loaded with catalytic metal.

A catalytic converter is conventionally used for removing hydrocarbon (hereinafter referred to HC), carbon monoxide (CO) and nitrogen oxide (NOx) in exhaust gas flowing from e.g. an internal combustion engine of an automotive vehicle. It has a substrate or support, and an oxygen storage material coated on a carrier, such as a honeycomb shaped carrier made of cordierite. The substrate loads a catalytic metal, such as rhodium (Rh) and platinum (Pt), thereon. It may be made of metal oxide, such as alumina (Al₂O₃), and be porous, or in other words, have a greater specific surface area. Therefore, it can load the catalytic metal in a highly dispersed state, and prevent aggregation or sintering of the catalytic metal that may be exposed to a high temperature exhaust gas.

The oxygen storage material may store and release oxygen depending on a change of oxygen concentration caused by variation of air fuel ratio of exhaust gas flowing from an internal combustion engine for controlling an oxidized state of the catalytic metal or supplying active oxygen to the catalytic metal. It may be made of metal oxide, such as ceria (CeO₂), and load the catalytic metal thereon. It may not have such a great specific surface area as alumina does, and catalytic metal loaded thereon may be less dispersed and more vulnerable to aggregation or sintering. Therefore, the oxygen storage material may have less heat durability.

U.S. Patent No. 6,335,305 describes a substrate including a mixture containing a porous oxide and a compound oxide. The porous oxide may be alumina. The compound oxide contains aluminum (Al), cerium (Ce), zirconium (Zr), yttrium (Y), and lanthanum (La). It is prepared by adding a basic solution such as ammonia water to a salt solution containing Al, Ce, Zr, Y, and La, co-precipitating a precursor of the compound oxide, and calcining the co-precipitated precursor. It has oxygen storage capacity because of ceria (CeO₂) contained therein. It may also improve the heat durability because of greater specific surface area of alumina (Al₂O₃) contained therein, and lanthanum that has a superior heat resistance.

However, the oxygen storage material, such as ceria, of the '305 patent is a part of the compound oxide including alumina, and there may be lesser amount of the oxygen storage material on a particle surface of the compound oxide so that there may be less amount of catalytic metal loaded on or closer to the oxygen storage material. Consequently, it may degrade the activity of the catalytic metal due to lack of enough oxygen stored in the proximity. Therefore, there is a need to increase the amount of the oxygen storage material on the surface of the substrate particle.

Accordingly, there is provided, in one aspect of the present invention, a catalytic matter comprising alumina particles. A compound oxide is dispersedly loaded on surfaces of the alumina particles. The compound oxide contains cerium, zirconium, and lanthanum, but not aluminum. A catalytic metal is loaded on the surfaces of the alumina particles. Preferably, said compound oxide further contains yttrium.

By dispersedly loading the compound oxide containing cerium as an oxygen storage material on the alumina particle surfaces, the amount of the oxygen storage material on the alumina particles may be increased, and the catalytic metal may be loaded on or in the proximity of the oxygen storage material. Therefore, the catalytic metal may be supplied with sufficient amount of active oxygen to purify the exhaust gas.

There is provided, in a second aspect of the present description, a method of manufacturing catalytic matter. The method comprises preparing a first acidic solution containing aluminum, adding a first basic solution to the first acidic solution, thereby obtaining a second basic solution and precipitating a first hydroxide in the second basic solution, preparing a second acidic solution containing cerium, zirconium and lanthanum, adding the second acidic solution to the first hydroxide, thereby precipitating a second hydroxide on the first hydroxide, drying and calcining the first and second hydroxides to obtain an oxide matter, and loading a catalytic metal on the oxide matter.

By precipitating the second hydroxide, which is a precursor of a compound oxide containing cerium, zirconium and lanthanum or a part of the oxide matter, on the first hydroxide, which is a precursor of the alumina particles or another part of the oxide matter, the compound oxide is dispersedly loaded on the surfaces of the alumina particles, the amount of the oxygen storage material on the alumina particles may be increased, and the catalytic metal may be loaded on or in the proximity of the oxygen storage material. Therefore, the catalytic matter having the catalytic metal supplied with sufficient amount of active oxygen to purify the exhaust gas can be manufactured.

The advantages described herein will be more fully understood by the following examples which are not intended to limit the present invention, with further reference to the drawings wherein:
Figure 1 is a schematic view showing a structure of a La containing alumina particle and a compound oxide;
Figure 2 is a photograph taken by a transmission electron microscope (TEM) and showing a surface of a La containing alumina particle and a dispersedly loaded compound oxide containing Ce, Zr, Y, and La on the alumina particle;
Figure 3 is a schematic view of an apparatus measuring oxygen concentration in model gas upstream and downstream of a catalyst specimen;
Figure 4 is a graph showing oxygen concentration measured by the apparatus of Figure 3 and transferred into an air fuel ratio, and a difference of the air fuel ratio between upstream and downstream of the catalyst specimen;
Figure 5 is a graph showing oxygen release amount versus weight percent of La₂O₃ contained in Ce-Zr-Y-La compound oxide with respect to a total weight of La₂O₃ contained in the catalytic matter; and
Figure 6 is a graph showing NOx conversion rate at 500°C (NOx C500) and HC light-off temperature (HC T50) versus weight percent of La₂O₃ contained in Ce-Zr-Y-La compound oxide with respect to the total weight of La₂O₃ contained in the catalytic matter.

Catalytic matter and catalyst bricks according to an embodiment of the present invention will now be described by first describing a preparation method of catalytic matter of Example 1.

The catalyst bricks of the embodiment may be installed in an exhaust passage of an internal combustion engine. The internal combustion engine may be a four stroke engine using fossil fuel such as gasoline as its fuel, and mounted on an automotive vehicle for propelling it.

### Preparation of specimen of Example 1

An aluminum nitrate 9 hydrate (111.35g) and lanthanum nitrate 6 hydrate (4.09g) are dissolved in ion exchange water (480 ml) to prepare a first salt solution. The first salt solution or nitrate solution is mixed with a first basic solution or 28% ammonia water that is diluted by eight times (1600 ml), and a second basic solution is obtained. Then, first co-precipitated matter or first hydroxide of aluminum and lanthanum (hereafter may be referred to as "Al-La-OH") is precipitated in the second basic solution. The first hydroxide is a precursor of La containing alumina or compound oxide of aluminum and lanthanum (hereafter may be referred to as "Al-La-O") as a catalyst support material. Basic slurry of the first hydroxide (pH = 9 or greater) is obtained.

On the other hand, a cerium nitrate 6 hydrate (7.52g), a zirconium nitrate solution of 25.13 wt% (8.49g), a lanthanum nitrate 6 hydrate (0.46g), and a yttrium nitrate 6 hydrate (0.32g) are dissolved into ion exchange water (400ml) to prepare a second salt solution. The second salt solution or nitrate solution is mixed with the basic slurry of the first hydroxide (Al-La-OH), thereby precipitating second co-precipitated matter on the first hydroxide (Al-La-OH). The second co-precipitated matter is a second hydroxide of cerium, zirconium, lanthanum and yttrium (hereafter may be referred to as "Ce-Zr-Y-La-OH"), which is a precursor of an oxygen storage material or compound oxide of cerium, zirconium, lanthanum and yttrium (hereafter may be referred to as "Ce-Zr-Y-La-O").

The resulting slurry containing the first hydroxide (Al-La-OH) and the second hydroxide (Ce-Zr-Y-La-OH) is dehydrated by a centrifugal separation method, and thereafter dried in air at 300°C for 10 hours, thereby obtaining solid matter containing the first compound oxide (Al-La-O) and the second compound oxide (Ce-Zr-Y-La-O). Then, the solid matter (Al-La-O + Ce-Zr-Y-La-O) is crushed, and calcined in air at 500°C for 2 hours, thereby obtaining support material powder.

This support material powder (20g) is mixed with an aqueous solution to make a slurry, and thereafter it is mixed with a palladium nitrate solution (4.33 wt%) of 4.62g. Palladium as a catalytic metal is fixed and loaded onto the support material through evaporation, drying and solidification, and thereafter it is calcined in air at 500°C for 2 hours, thereby obtaining catalyst powder.

The catalyst powder (10g) and a 10.3 wt% zirconia binder are added to ion exchange water to make a slurry solution, and it is wash-coated on a honeycomb carrier (volume: 25ml, core density: 3mil/600cpsi) made of cordierite. Thereafter, the wash-coated carrier is calcined in air at 500°C for 2 hours, and aged in air at 1100°C for 24 hours. An amount of the catalyst powder carried onto the honeycomb carrier is 100g/L (100g of catalyst powder is carried on 1 L of carrier), and an amount of palladium carried on the carrier is 1.0g/L.

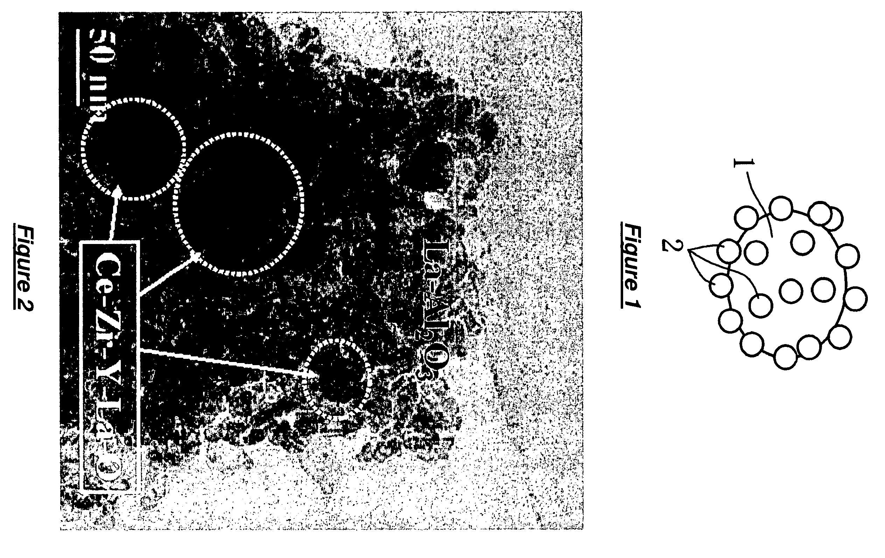

The catalyst powder, as schematically shown in Figure 1, comprises a particle of the first compound oxide 1 (AI-La-O) and particles of the second compound oxide 2 (Ce-Zr-Y-La-O), which are loaded on the Al-La-O particle 1, and further comprises the catalytic metal (Pt) not shown loaded on the particles of the first and second compound oxides.

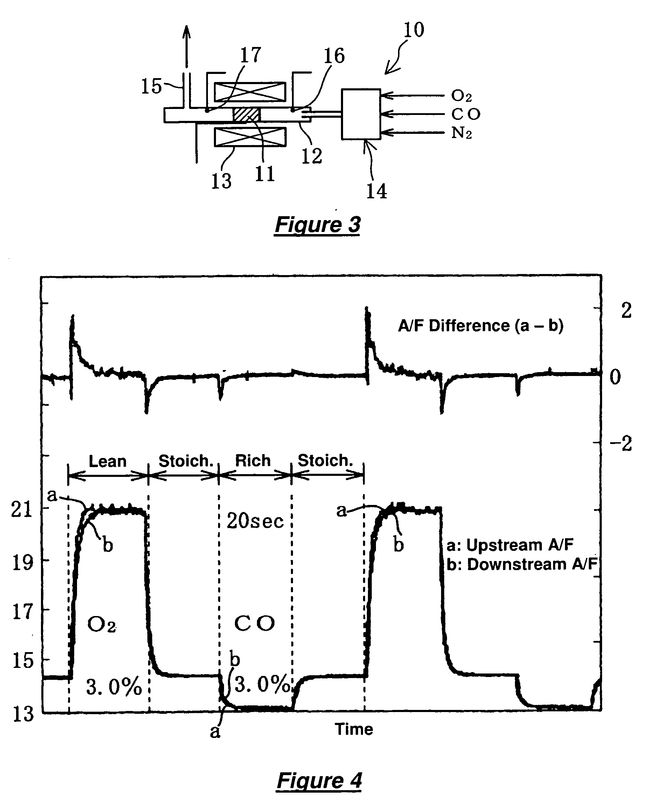

As shown in the photograph of Figure 3 observed by a transmission electron microscope (TEM), black fine particles of the second compound oxide (Ce-Zr-Y-La-O) are dispersed on surfaces of the porous particles of the first compound oxide (Al-La-0) at a proper density.

Both of the first compound oxide (Al-La-O) and the second compound oxide (Ce-Zr-Y-La-O) contain La₂O₃. A weight ratio between La₂O₃ in the first compound oxide (Al-La-O) and La₂O₃ in the second compound oxide (Ce-Zr-Y-La-O) is 9:1 in Example 1.

### Examples 2 through 5

Catalyst matter and catalyst bricks of Examples 2 through 5 are prepared in the same way as Example 1 was prepared. However, the amount of lanthanum nitrate 6 hydrate to be dissolved in the ion exchange water to prepare the first salt solution and that to prepare the second salt solution are varied while the amounts of all other starting materials are kept the same, as shown in Table 1. Consequently, a ratio between weights of lanthanum oxide (La₂O₃ in the first compound oxide (Al-La-O) and the second compound oxide (Ce-Zr-Y-La-O) ranges from 7:3 (Example 2) through 1:9 (Example 5), as shown in Table 1.

### Example 6

Catalyst matter and a catalyst brick of Example 6 are prepared in the same way as the Example 1 was prepared except that the amount of lanthanum nitrate 6 hydrate to be dissolved in the ion exchange water is changed. Specifically, that to prepare the first salt solution is zero, and that to prepare the second salt solution is 4.37g (rather than respectively 4.09 g and 0.46g in Example 1). The catalyst powder of Comparative Example 2 has the same structure as the Example 1 does as shown in Figure 1. In other words, it comprises a particle of the first oxide 1 (Al-O), which does not contain La₂O₃, and particles of the second compound oxide 2 (Ce-Zr-Y-La-O), which are loaded on the Al-O particle 1, and further comprises the catalytic metal (Pt) not shown loaded on the particles of the first oxide and the second compound oxide.

### Comparative Example 1

Catalyst matter and a catalyst brick of Comparative Example 1 are prepared in the same way as the Example 1 was prepared except that the amount of lanthanum nitrate 6 hydrate to be dissolved in the ion exchange water is changed. Specifically, that to prepare the first salt solution is 4.57g, and that to prepare the second salt solution is zero (rather than respectively 4.09 g and 0.46g in Example 1). The catalyst powder of Comparative Example 1 has the same structure as the Example 1 does as shown in Figure 1. In other words, it comprises a particle of the first compound oxide 1 (Al-La-O) and particles of the second compound oxide 2 (Ce-Zr-Y-O), which are loaded on the Al-La-O particle 1 and does not contain La₂O₃, and further comprises the catalytic metal (Pt) not shown loaded on the particles of the first and second compound oxides.

**Table 1**

| | Oxides in Al-La-O (wt%) | | Oxides in Ce-Zr-Y-La-O (wt%) | | | | La₂O₃ Weight Ratio |
|---|---|---|---|---|---|---|---|
| | La₂O₃ | Al₂O₃ | CeO 2 | ZrO₂ | La₂O₃ | Y₂O₃ | |
| Comp. Ex. 1 | 5.70 | 76.9 | 9.9 | 7.1 | 0.00 | 0.3 | 10:0 |
| Example 1 | 5.10 | 76.9 | 9.9 | 7.1 | 0.60 | 0.3 | 9:1 |
| Example 2 | 4.00 | 76.9 | 9.9 | 7.1 | 1.70 | 0.3 | 7:3 |
| Example 3 | 2.85 | 76.9 | 9.9 | 7.1 | 2.85 | 0.3 | 5:5 |
| Example 4 | 1.70 | 76.9 | 9.9 | 7.1 | 4.00 | 0.3 | 3:7 |
| Example 5 | 0.60 | 76.9 | 9.9 | 7.1 | 5.10 | 0.3 | 1:9 |
| Example 6 | 0.00 | 76.9 | 9.9 | 7.1 | 5.70 | 0.3 | 0:10 |

### Preparation of specimen of Comparative Example 2

An aluminum nitrate 9 hydrate (111.35g) and lanthanum nitrate 6 hydrate (3.20g) are dissolved in ion exchange water (380 ml) to prepare a first nitrate solution. The first nitrate solution is mixed with a 28% ammonia water that is diluted by eight times (1200 ml), and neutralized, and first co-precipitated matter (Al-La-OH) is obtained in the alkaline solution. The first co-precipitated matter is filtrated, dehydrated, dried in air at 300°C for 10 hours, and calcined at 500°C for 10 hours, and a first compound oxide (Al-La-O) is obtained.

On the other hand, a cerium nitrate 6 hydrate (7.52g), a zirconium nitrate solution of 25.13 wt% (8.49g), a lanthanum nitrate 6 hydrate (1.37g), and a yttrium nitrate 6 hydrate (0.32g) are dissolved into ion exchange water (100ml) to prepare a second nitrate solution. The second nitrate solution is mixed with a 28% ammonia water that is diluted by eight times (400 ml), and neutralized, and second co-precipitated matter (Ce-Zr-La-Y-OH) is obtained in the basic solution. The second co-precipitated matter is filtrated, dehydrated, dried in air at 300°C for 10 hours, and calcined at 500°C for 10 hours, and a second compound oxide (Ce-Zr-La-Y-O) is obtained.

The first compound oxide (Al-La-O) and the second compound oxide (Ce-Zr-La-Y-O) are respectively weighed 16.16g and 3.84g totaling 20g, and mixed with each other to obtain physically mixed powder. Then, the mixed powder is added to an aqueous solution to obtain a slurry. Thereafter, a palladium nitrate solution (4.33 wt%) of 4.62 g is added to the solution, and then the palladium is fixed and loaded onto the mixed powder through evaporation, drying and solidification. Then, it is calcined in air at 500°C for 2 hours, thereby obtaining catalyst powder.

The catalyst powder (10g) and a 10.3 wt% zirconia binder are added to ion exchange water to make a slurry solution, and it is wash-coated on a honeycomb carrier (volume: 25ml, core density: 3mil/600cpsi) made of cordierite. Thereafter, the wash-coated carrier is calcined in air at 500°C for 2 hours, and aged in air at 1100°C for 24 hours. An amount of the catalyst powder carried onto the honeycomb carrier is 100g/L (100g of catalyst powder is carried on 1 L of carrier), and an amount of palladium carried on the carrier is 1.0g/L.

In the catalytic matter of Comparative Example 2, the first compound oxide (Al-La-O) and the second compound oxide (Ce-Zr-La-Y-O) are physically mixed randomly, while the La₂O₃ weight ratio between the first and second oxides is 7:3, which is the same as in Example 2.

### Preparation of specimen of Comparative Example 3

A cerium nitrate 6 hydrate (39.21 g), a zirconium nitrate solution of 25.13 wt% (44.28g), a lanthanum nitrate 6 hydrate (7.14g), and a yttrium nitrate 6 hydrate (1.67g) are dissolved into ion exchange water (400ml) to prepare a nitrate solution. The nitrate solution is mixed with a 28% ammonia water that is diluted by eight times (1600 ml), and neutralized, and co-precipitated matter (Ce-Zr-La-Y-OH) is obtained in the basic solution. The co-precipitated matter is filtrated, dehydrated, dried in air at 300°C for 10 hours, and calcined at 500°C for 10 hours, and a compound oxide (Ce-Zr-La-Y-O) is obtained.

Powder of the compound oxide of 20g is added to an aqueous solution to obtain a slurry. Thereafter, a palladium nitrate solution (4.33 wt%) of 4.62 g is added to the solution, and then the palladium is fixed and loaded onto the mixed powder through evaporation, drying and solidification. Then, it is calcined in air at 500°C for 2 hours, thereby obtaining catalyst powder.

The catalyst powder (10g) and a 10.3 wt% zirconia binder are added to ion exchange water to make a slurry solution, and it is wash-coated on a honeycomb carrier (volume: 25ml, core density: 3mil/600cpsi) made of cordierite. Thereafter, the wash-coated carrier is calcined in air at 500°C for 2 hours, and aged in air at 1100°C for 24 hours. An amount of the catalyst powder carried onto the honeycomb carrier is 100g/L (100g of catalyst powder is carried on 1 L of carrier), and an amount of palladium carried on the carrier is 1.0g/L.

In the catalytic matter of Comparative Example 3, there is no alumina substrate like the first compound oxides (Al-La-O) of Examples 1 through 5 and Comparative Examples 1 and 2 and the first oxide (Al-O) of Example 2. On the other hand, the compound oxide of Comparative Example 4 has the same composition as the second compound oxide (Ce-Zr-La-Y-O) of Example 2.

### Rig Test Procedure

The catalyst bricks prepared as described above are attached to a fixed-floor through-flow type model gas reactor. Tests of purification performance for simulated exhaust gas (rig test) are performed on the model gas reactor. The simulated exhaust gas flows at space velocity (S/V) of 60,000/hr. A temperature of the simulated exhaust gas is 100-500°C at the inlet of the catalyst brick with the temperature rising rate of 30°C/min. The air fuel ratio of the gas cyclically varies within 14.7±0.9 at a frequency of 1.0Hz, and its composition is shown in Table 2. Compositions of the gas upstream and downstream are detected and analyzed using an exhaust gas analyzer.

**Table 2**

| A/F | 13.8 | 14.7 | 15.6 |
|---|---|---|---|
| C₃H₆ (wt. ppm) | 541 | 555 | 548 |
| CO (wt%) | 2.35 | 0.6 | 0.592 |
| NO (wt. ppm) | 975 | 1000 | 980 |
| CO₂ (wt%) | 13.55 | 13.9 | 13.73 |
| H₂ (wt%) | 0.85 | 0.2 | 0.2 |
| O₂ (wt%) | 0.58 | 0.6 | 1.85 |
| H₂O (vol.%) | 10 | 10 | 10 |

### High Temperature Purification Performance

NOx conversion rates when the inlet temperature is 500°C (NOx C500) for Examples 1 through 5 and Comparative Examples 1 through 4 are measured, and

**Table 3**

| | La₂O₃ Weight Ratio in Al-La-O : Ce-Zr-La-Y-O | NOx C500 (%) |
|---|---|---|
| Comparative Example 1 | 10:0 | 74.5 |
| Example 1 | 9:1 | 78.9 |
| Example 2 | 7:3 | 80.0 |
| Example 3 | 5:5 | 75.1 |
| Example 4 | 3:7 | 78.5 |
| Example 5 | 1:9 | 82.4 |
| Example 6 | 0:10 | 76.3 |
| Comparative Example 2 | 7:3 (physical mix) | 70.3 |
| Comparative Example 3 | 0:10 (no alumina) | 55.3 |

As can be seen from Table 3, all the Examples 1 through 6 have better NOx conversion rates than Comparative Examples 1 through 3.

Further HC and CO conversion rates when the inlet temperature is 500°C (HC C500 and CO C500) for Example 2 and Comparative Example 2 and 3 are measured, and shown in Table 4.

**Table 4**

| | Substrate Structure | HC C500 (%) | CO C500 |
|---|---|---|---|
| Example 2 | Ce-Zr-La-Y-O on Al-La-O | 98.3 | 89.32 |
| Comparative Example 2 | Ce-Zr-La-Y-O + Al-La-O (Physical Mixture) | 97.3 | 83.1 |
| Comparative Example 3 | Ce-Zr-La-Y-O only | 90.2 | 73.1 |

As can be seen from Table 2, Example 2 has better HC and CO conversion rates than Comparative Examples 2 and 3.

Therefore, it can be seen that dispersedly loading the second compound oxide (Ce-Zr-Y-La-O) on the surface of the first oxide (Al-La-O or Al-O) in Examples 1 through 6 causes the second compound oxide (Ce-Zr-Y-La-O) to be more exposed to the exhaust gas, and improves the oxygen storage capacity. Further, it can be seen that La₂O₃ contained in the second compound oxide improves heat resistance of the second compound oxide, which prevents aggregation or sintering of the catalytic metal loaded on or in the proximity of the second compound oxide, and improves the catalytic activity. Therefore, it can be seen that the conversion rates are improved over the Comparative Examples.

### Light-off Performance

Using the model gas reactor and the exhaust gas analyzer, a temperature at which a conversion rate is 50% (T50) is measured. T50 of HC for Examples 1 through 6 and Comparative Examples 1 through 3 are measured, and shown in Table 5.

**Table 5**

| | La₂O₃ Weight Ratio in Al-La-O : Ce-Zr-La-Y-O | HC T50 (°C) |
|---|---|---|
| Comparative Example 1 | 10:0 | 340 |
| Example 1 | 9:1 | 337 |
| Example 2 | 7:3 | 335 |
| Example 3 | 5:5 | 339 |
| Example 4 | 3:7 | 341 |
| Example 5 | 1:9 | 331 |
| Example 6 | 0:10 | 334 |
| Comparative Example 2 | 7:3 (physical mix) | 345 |
| Comparative Example 3 | 0:10 (no alumina) | 395 |

As can be seen from Table 5, Examples 1 through 6 and Comparative Example 1 show lower HC T50s than Comparative Examples 2 and 3 do.

Further T50s of CO and NOx for Example 2 and Comparative Example 2 and 3 are measured, and shown in Table 6.

**Table 6**

| | Physical Structure | CO T50 (°C) | NOx T50 (°C) |
|---|---|---|---|
| Example 2 | Ce-Zr-La-Y-O on Al-La-O | 333 | 376 |
| Comparative Example 2 | Ce-Zr-La-Y-O + Al-La-O (Physical Mixture) | 346 | 390 |
| Comparative Example 3 | Ce-Zr-La-Y-O only | 400 | 445 |

As can be seen from Table 6, Example 2 shows lower CO and NOx T50s than Comparative Examples 2 and 3 do.

Therefore, it can be seen that dispersedly loading the second compound oxide (Ce-Zr-Y-La-O) on the surface of the first oxide (Al-La-O or Al-O) in Examples 1 through 6 and Comparative Example 1 causes the second compound oxide (Ce-Zr-Y-La-O) to be more exposed to the exhaust gas, and improves the oxygen storage capacity, so that the active oxide is more supplied to the catalytic metal loaded on or in the proximity to the second compound oxide, and enhances the activity of the catalytic metal thereby lowering the T50 and improving the light-off performance.

### Oxygen Storage Capacity

Oxygen storage capacity is evaluated using an apparatus 10 shown in Figure 3. The apparatus 10 comprises a glass tube 12 that holds a specimen 11 therein, an electric heater 13 that heats the specimen of catalyst brick 11, a pulse gas generator 14 that is arranged upstream of the specimen 11 and capable of supplying pulsed gases of oxygen (O₂), carbon monoxide (CO), and nitrogen (N₂), and a capillary column 15 coupled to the glass tube 12 as its outlet. The apparatus 10 further comprises an oxygen sensor 16 arranged between the pulse gas generator 14 and the specimen 11 in the glass tube 12, and an oxygen sensor 17 arranged between the specimen 11 and the capillary column 15 in the glass tube 12. The oxygen sensors 16 and 17 can detect oxygen concentration of the model gas.

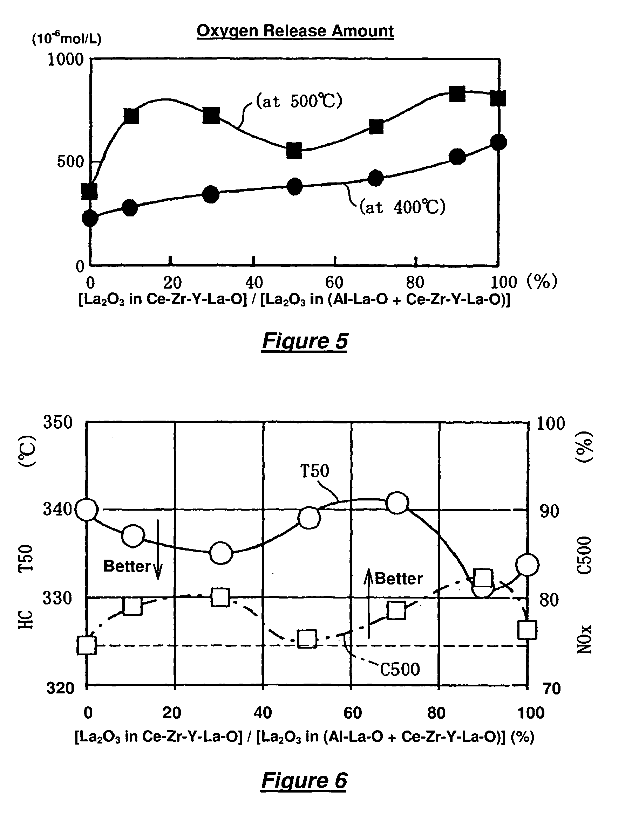

Base gas or nitrogen gas is supplied to the glass tube 22 at a constant rate, while oxygen gas and carbon monoxide gas are supplied intermittently so as to simulate cycles of fuel-rich, stoichiometric and fuel-lean exhaust gases for 20 seconds each. Then, the outputs of the oxygen sensors 16 and 17 are read out. A lower graph of Figure 7 shows an upstream air fuel ratio a that is converted from the output of the upstream oxygen sensor 16, and a downstream air fuel ratio b that is converted from the output of the downstream oxygen sensor 17. An upper graph of Figure 4 shows the difference between the air fuel ratios a and b.

For estimating the oxygen storage capacity, an amount of oxygen released from a time of switching from the stoichiometric to the fuel-rich until the stored oxygen is fully released is estimated by integrating a difference between the outputs of the upstream and downstream oxygen sensors 16 and 17 during that period. The oxygen release amount for Examples 1 through 6 and Comparative Example 1 are estimated, and shown in Table 7 in 10⁻⁶mol per 1 liter of catalyst brick volume. For the oxygen release amount estimation, a temperature at the inlet of the catalyst brick is set 400°C and 500°C.

**Table 7**

| | La₂O₃ Weight Ratio in Al-La-O : Ce-Zr-La-Y-O | Oxygen Release Amount (10⁻⁶ mol/L) | |
|---|---|---|---|
| | | at 400°C | at 500°C |
| Comparative Example 1 | 10:0 | 230 | 358 |
| Example 1 | 9:1 | 282 | 730 |
| Example 2 | 7:3 | 343 | 730 |
| Example 3 | 5:5 | 381 | 557 |
| Example 4 | 3:7 | 420 | 675 |
| Example 5 | 1:9 | 527 | 839 |
| Example 6 | 0:10 | 595 | 818 |

As can be seen from Table 7, Examples 1 through 6 show higher oxygen release amount than Comparative Example 1 does. It can be seen that La₂O₃ contained in the second compound oxide increases the oxygen storage capacity, presumably because it enhances the prevention of aggregation or sintering of the second compound oxide.

### Preferred weight ratio of La₂O₃

Graphs of Figure 5 depict the oxygen storage capacity or release amount versus weight percent of La₂O₃ in the second compound oxide (Ce-Zr-La-Y-O) with respect to the total weight of La₂O₃ contained in the catalytic matter. The 0% corresponds to 10:0 of the previously described La₂O₃ weight ratio, and the 100% corresponds to 0:10. When the inlet temperature is 400°C, the oxygen storage capacity is constantly improved as the La₂O₃ weight ratio in the second compound oxide (Ce-Zr-La-Y-O) increases. On the other hand, when the inlet temperature is 500°C, the oxygen storage capacity is improved as the La₂O₃ weight ratio in the second compound oxide (Ce-Zr-La-Y-O) increases, but it is once decreased around the ratio of 50% (5:5) although it is still much better than that of Comparative Example 1.

It can be presumed that in a range of the La₂O₃ weight ratio between 7 and 44% where more La₂O₃ is contained in the first compound oxide or substrate, the heat resistance of the substrate is increased, and the heat resistance of the second compound oxide loaded on the substrate is further improved, and aggregation or sintering of the second compound oxide is prevented. Then, eventually the oxygen storage capacity of the second compound oxide is improved. In a range between 65 and 100% where more La₂O₃ is contained in the second compound oxide, the heat resistance of the second compound oxide is directly increased, and the oxygen storage capacity of the second compound oxide is improved. But, in the intermediate range between 45 and 64%, either of the heat resistance of the first and second compound oxides is not improved enough for 500°C.

Consequently, from the viewpoint of the oxygen storage capacity at 500°C, La₂O₃ weight ratio in the second compound oxide is preferably between 7 and 44% or between 65 and 100% of the total weight of La₂O₃ contained in the catalyst matter.

Graphs of Figure 6 depict the NOx C500 and the HC T50 for Comparative Example 1 and Examples 1 through 6 versus the La₂O₃ weight ratio between the first compound oxide (Al-La-O) and the second compound oxide (Ce-Zr-La-Y-O). In terms of NOx C500, the La₂O₃ weight ratio in the second compound oxide is preferred to be between 1 and 42% or between 60 and 100% of the total weight of La₂O₃ contained in the catalyst matter, more preferably between 7 and 40% or between 70 and 95%.

In terms of HC T50, the La₂O₃ weight ratio in the second compound oxide is preferred to be between 1 and 50% or between 75 and 100% of the total weight of La₂O₃ contained in the catalyst matter.

It is needless to say that the present invention is not limited to the embodiments and the examples described above and that various improvements and alternative designs are possible without departing from the substance of this invention as claimed in the attached claims. For example, although in the above embodiment palladium is solely adopted as catalytic metal, any other metal having a catalytic activity such as other precious metal, for example platinum (Pt) or rhodium (Rh) instead of or in addition to palladium.

## Claims

1. Catalytic matter comprising:
alumina particles;
a compound oxide which is dispersedly loaded on surfaces of said alumina particles, and contains cerium, zirconium, and lanthanum, but not aluminum; and
a catalytic metal loaded on said alumina particles.

2. The catalytic matter as described in claim 1, wherein said alumina particles are composed of a compound oxide containing lanthanum.

3. The catalytic matter as described in claim 1 or 2, wherein the weight of lanthanum oxide contained in said compound oxide is 1% or greater of total weight of lanthanum oxide contained in said catalytic matter.

4. The catalytic matter as described in claim 3, wherein the weight of lanthanum oxide contained in said compound oxide is between 1 and 50 % of the total weight of lanthanum oxide contained in said catalytic matter.

5. The catalytic matter as described in claim 4, wherein the weight of lanthanum oxide contained in said compound oxide is between 7 and 40 % of the total weight of lanthanum oxide contained in said catalytic matter.

6. The catalytic matter as described in claim 3, wherein the weight of lanthanum oxide contained in said compound oxide is 75% or greater of the total weight of lanthanum oxide contained in said catalytic matter.

7. The catalytic matter as described in any one of the preceding claims, wherein said oxygen storage material of said compound oxide further contains yttrium.

8. A method of manufacturing catalytic matter comprising the steps of:
preparing a first acidic solution containing aluminum;
adding a first basic solution to said first acidic solution, thereby obtaining a second basic solution and precipitating a first hydroxide in said second basic solution;
preparing a second acidic solution containing cerium, zirconium and lanthanum;
adding said second acidic solution to said first hydroxide, thereby precipitating a second hydroxide on said first hydroxide;
drying said first and second hydroxides to obtain a first oxide; and
loading a catalytic metal on said first oxide.

9. The method as described in claim 8, wherein said first acidic solution is prepared by dissolving an aluminum nitrate hydrate into water.

10. The method as described in claim 9, wherein said first acidic solution is prepared by further dissolving a lanthanum nitrate hydrate into water.

11. The method as described in claim 8, 9 or 10, wherein said second acidic solution further contains yttrium.
